Europäisches Patentamt

European Patent Office

Office européen des brevets

(19)

(11) Numéro de publication: **0 374 031**

**A1**

# (12) DEMANDE DE BREVET EUROPEEN

(21) Numéro de dépôt: **89403435.4**

(22) Date de dépôt: **12.12.89**

(51) Int. Cl.5: **G02B 23/24**

(30) Priorité: **12.12.88 FR 8816301**

(43) Date de publication de la demande:
**20.06.90 Bulletin 90/25**

(84) Etats contractants désignés:
**DE FR GB IT**

(71) Demandeur: **FIBRES OPTIQUES RECHERCHE ET TECHNOLOGIE**
**4, rue Traversière**
**F-91410 Dourdan(FR)**

(72) Inventeur: **Fort, François**
**67, Avenue de Ségur**
**F-75007 Paris(FR)**

(74) Mandataire: **Ores, Irène et al**
**CABINET ORES 6, Avenue de Messine**
**F-75008 Paris(FR)**

(54) **Vidéo-endoscopes rigides.**

(57) Vidéo-endoscope rigide, comprenant :
- un dispositif optique, disposé à une extrémité, qui est destiné à donner une image d'un objet à observer et qui est logé à l'intérieur d'un tube d'accès (5) à cet objet ;
- un dispositif de prises de vue (30), dont l'axe est aligné avec l'axe du dispositif optique et qui est destiné à capter l'image fournie par ce dispositif optique ;
- un faisceau (25) de fibres optiques (35), qui est destiné, d'une part, à être relié à une source optique et, d'autre part, à éclairer l'objet à observer et qui passe par le tube d'accès (5) à l'objet précité ; et
- des câbles de liaison optiques et électriques.

Le vidéo-endoscope selon l'invention est caractérisé en ce qu'il comprend, en outre, un dispositif de rotation de l'image (21 à 24 et 28) fournie par le dispositif optique pour ajuster de façon optimale l'orientation de cette image par rapport à un observateur, lequel dispositif de rotation de l'image est disposé à l'intérieur d'une poignée de manoeuvre (15) conjointement avec le dispositif optique. De plus, le tube d'accès à l'objet est amovible et interchangeable et est pourvu de moyens permettant la vision latérale de cet objet, eux aussi amovibles et interchangeables.

Application à l'endoscopie médicale et industrielle.

FIG. 4

## VIDEO-ENDOSCOPES RIGIDES

La présente invention est relative à un vidéo-endoscope rigide.

Les endoscopes classiques rigides se composent essentiellement d'un tube métallique d'accès à l'objet à visualiser, à l'intérieur duquel est disposé un dispositif optique comprenant, à une extrémité, un "train" de lentilles et, à l'autre extrémité, un embout d'oculaire. La visualisation de l'objet à observer se fait en plaçant l'oeil du côté de l'oculaire, qui reçoit l'image transportée par les "collecteurs" optiques.

Certains systèmes permettent l'adaptation sur cet oculaire d'une caméra TV, l'ensemble étant en général peu adapté mécaniquement et relativement lourd. On les appelle vidéo-endoscopes rigides.

Etant donné qu'il est rare, dans la pratique, qu'un observateur ou un dispositif de prises de vue soit orienté de façon optimale par rapport à l'objet à observer, il est nécessaire d'ajuster l'orientation de l'image fournie par le dispositif optique, par rapport à l'observateur ou au dispositif de prises de vue précité.

Généralement, cette rotation de l'image est obtenue, dans la technique antérieure, simplement en tournant le tube d'accès à l'objet à visualiser. Toutefois, cette opération manuelle est très fastidieuse à cause d'un grand nombre de câbles de liaison, optiques et électriques, qui finissent par s'entrecroiser.

En ce qui concerne la visualisation de l'objet, celle-ci est directe ou oblique (notamment à 90° ou à 60°) par rapport à l'axe optique de l'endoscope, la vision oblique étant normalement obtenue à l'aide d'un miroir disposé à l'extrémité distale du tube d'accès à l'objet précité.

Toutefois, actuellement on utilise des endoscopes différents selon qu'il s'agisse de vision directe ou de vision oblique (ou latérale), ce qui a une incidence non négligeable sur les coûts De plus, en vision oblique, l'utilisation d'un miroir présente au moins deux inconvénients, dont le premier est dû à la double réflexion sur la surface argentée du miroir et sur le verre de support de celle-ci, -ce qui crée un effet optique de superposition d'images gênant la vision-, alors que le deuxième inconvénient est dû au dépôt d'agents polluants (notamment de poussière) dont l'élimination n'est pas aisée, en raison de la difficulté d'accès à l'intérieur du tube qui contient le miroir, et risque d'abîmer le verre de support, notamment par abrasion, et donc de gêner encore plus la vision.

La présente invention s'est donc donnée pour but de pourvoir à un vidéo-endoscope rigide qui répond mieux aux nécessités de la pratique que les vidéo-endoscopes rigides visant au même but antérieurement connu, notamment en ce que l'orientation de l'image de l'objet à observer, fournie par le dispositif optique, se fait aisément, sans qu'aucun risque d'entrecroisement des différents câbles ne se produise.

Un autre but de la présente invention est de réaliser un vidéo-endoscope rigide qui soit utilisable soit en vision directe soit en vision oblique, selon les besoins, évitant ainsi l'emploi de deux dispositifs différents.

La présente invention a pour objet un vidéo-endoscope rigide, comprenant :
- un dispositif optique (objectif), disposé à une extrémité, qui est destiné à donner une image d'un objet à observer et qui est logé à l'intérieur d'un tube d'accès à cet objet ;
- un dispositif de prises de vue, dont l'axe est aligné avec l'axe du dispositif optique et qui est destiné à capter l'image fournie par ce dispositif optique (ce dispositif de prises de vue pouvant être relié à un dispositif numérique de traitement d'images qui, à son tour, est relié à un ordinateur de pilotage et à un moniteur de visualisation de l'image ainsi formée, captée et traitée) ;
- un faisceau de fibres optiques, qui est destiné, d'une part, à être relié à une source optique et, d'autre part, à éclairer l'objet à observer et qui passe par ledit tube d'accès à l'objet précité ; et
- des câbles optiques et électriques, lequel vidéo-endoscope est caractérisé en ce qu'il comprend, en outre, un dispositif de rotation de l'image fournie par le dispositif optique, pour ajuster de façon optimale l'orientation de cette image par rapport à un observateur, lequel dispositif de rotation de l'image est disposé à l'intérieur d'une poignée de manoeuvre conjointement avec le dispositif de prises de vue, entre ce dernier et le dispositif optique.

Selon un mode de réalisation avantageux du vidéo-endoscope conforme à l'invention, ledit dispositif de rotation de l'image comporte :
- un système de prismes permettant la rotation de l'image (fournie par le dispositif optique) d'un angle 2 lorsqu'il tourne sur son axe d'un angle ,
- une cage dans laquelle est monté le système de prismes,
- un moyen d'actionnement de cette cage, à partir de l'extérieur, où ce moyen est accessible en passant par une fente transversale ménagée dans la paroi cylindrique extérieure de la poignée, sur une longueur permettant au moins une rotation de 180° de la cage, -avec le système de prismes qu'elle contient-, à cette rotation correspondant une rotation de 360° de l'image, ladite cage étant montée, libre de tourner, à l'intérieur d'une bague de support solidarisée avec la poignée.

Selon un autre mode de réalisation avantageux du vidéo-endoscope conforme à l'invention, les câbles optiques et électriques, qui comportent des raccords de liaison, sont réunis, à l'extérieur de la poignée, dans un câble composite unique, aboutissant à l'extrémité proximale de la poignée du vidéo-endoscope, et se divisent à l'intérieur de cette poignée, le câble électrique pour être relié au dispositif de prises de vue et le câble optique pour s'écarter de l'axe de la poignée et passer d'un côté de la bague de support précitée pour suivre ledit tube d'accès, dans lequel les fibres optiques sont disposées de manière à constituer un cylindre optique entourant le dispositif optique susdit, en sorte que l'éclairage de l'objet à observer se fait par un anneau lumineux apparaissant à l'extrémité distale du tube de visualisation, lorsque le câble optique est relié à ladite source.

Dans le cadre de la présente invention on propose également un tube d'accès à l'objet à visualiser qui est amovible et interchangeable, en particulier en fonction de l'angle d'observation, directe ou oblique, que l'objet fait par rapport à l'axe optique du vidéo-endoscope, ainsi qu'en fonction du diamètre et/ou de la longueur du tube d'accès.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels :

- la figure 1 est une illustration schématique montrant le fonctionnement du vidéo-endoscope conforme à l'invention ;

- la figure 2 est une vue suivant le plan II situé entre le dispositif de rotation de l'image selon l'invention et le dispositif de prises de vue, montrant le décentrement de l'axe optique par rapport à l'axe mécanique du vidéo-endoscope ;

- la figure 3 est une vue d'ensemble du vidéo-endoscope selon l'invention ;

- la figure 4 est une vue en coupe axiale de la poignée du vidéo-endoscope illustré à la figure 3 ;

- la figure 5 illustre une légère variante de la figure 4 correspondant au dispositif de rotation de l'image ;

- la figure 6 est une vue en élévation latérale d'une variante du tube d'accès à l'objet à visualiser à l'aide du vidéo-endoscope, cette variante permettant de transformer le vidéo-endoscope à vision directe en un vidéo-endoscope à vision oblique ; et

- la figure 7 est une vue en coupe de l'extrémité du tube d'accès à l'objet à visualiser représenté à la figure 6, destiné à montrer certains détails de construction.

Il doit être bien entendu, toutefois, que ces dessins et les parties descriptives correspondantes, sont donnés uniquement à titre d'illustration de l'objet de l'invention, dont ils ne constituent en aucune manière une limitation.

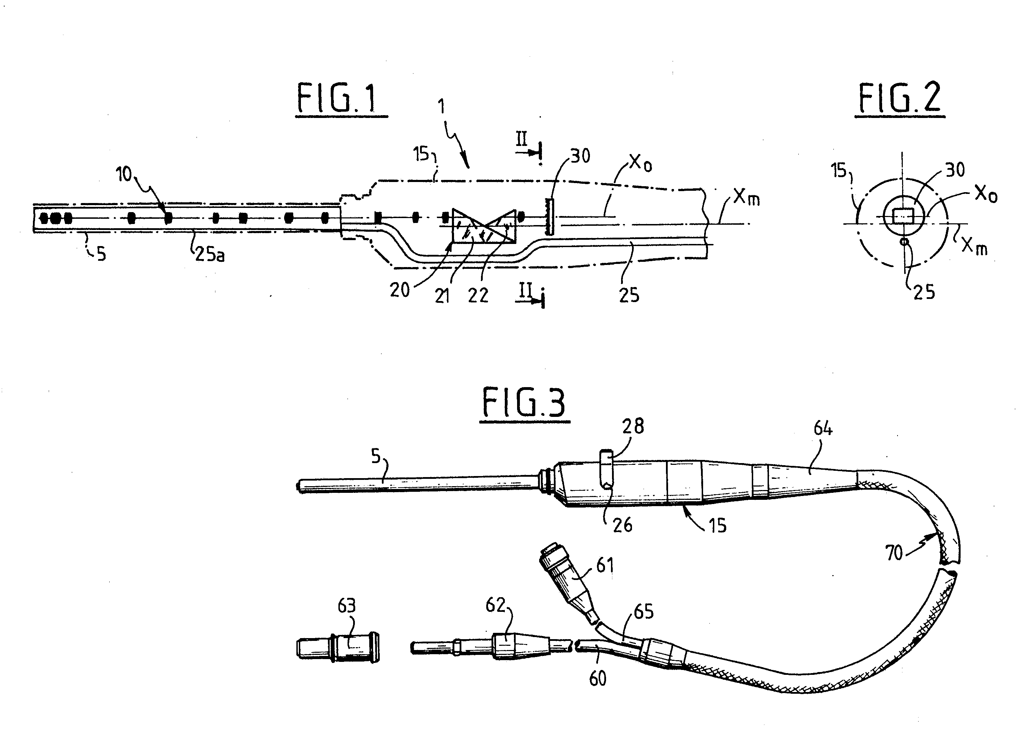

La figure 1 illustre un "train" de lentilles 10, représenté de façon schématique, contenu essentiellement à l'intérieur d'un tube 5 d'accès à un objet (non représenté) à visualiser, ce tube étant dessiné en traits mixtes à la figure 1. Ce système optique à lentilles, constitué par le "train" optique 10, se prolonge légèrement à l'intérieur de la poignée 15 (également représentée en traits mixtes à la figure 1) du vidéo-endoscope 1, de façon telle que l'axe Xo du dispositif optique rencontre un système de prismes 20, qui est susceptible de tourner autour de son axe Xm (correspondant à l'axe mécanique du vidéo-endoscope rigide selon l'invention) et qui est disposé entre le "train" optique 10 et un dispositif de prises de vue miniaturisé 30, lui aussi disposé, -comme le système de prismes 20-, de préférence à l'intérieur de la poignée 15. On peut remarquer que l'axe optique Xo est décentré par rapport à l'axe mécanique Xm (cf aussi la figure 2).

Les figures 1 et 2 illustrent -aussi schématiquement- le parcours du faisceau 25 de fibres optiques nécessaire à l'éclairage de l'objet à visualiser: après avoir parcouru la poignée, à proximité d'une paroi interne de celle-ci, les fibres optiques 35 du faisceau 25 suivent la paroi interne du tube d'accès 5, dans laquelle elles sont disposées de façon à constituer un cylindre optique 25a permettant d'obtenir, à l'extrémité distale du tube d'accès 5, une disposition annulaire des fibres optiques 35 qui, lorsque le faisceau 25-25a est relié à une source optique (non représentée), donne lieu à un anneau lumineux.

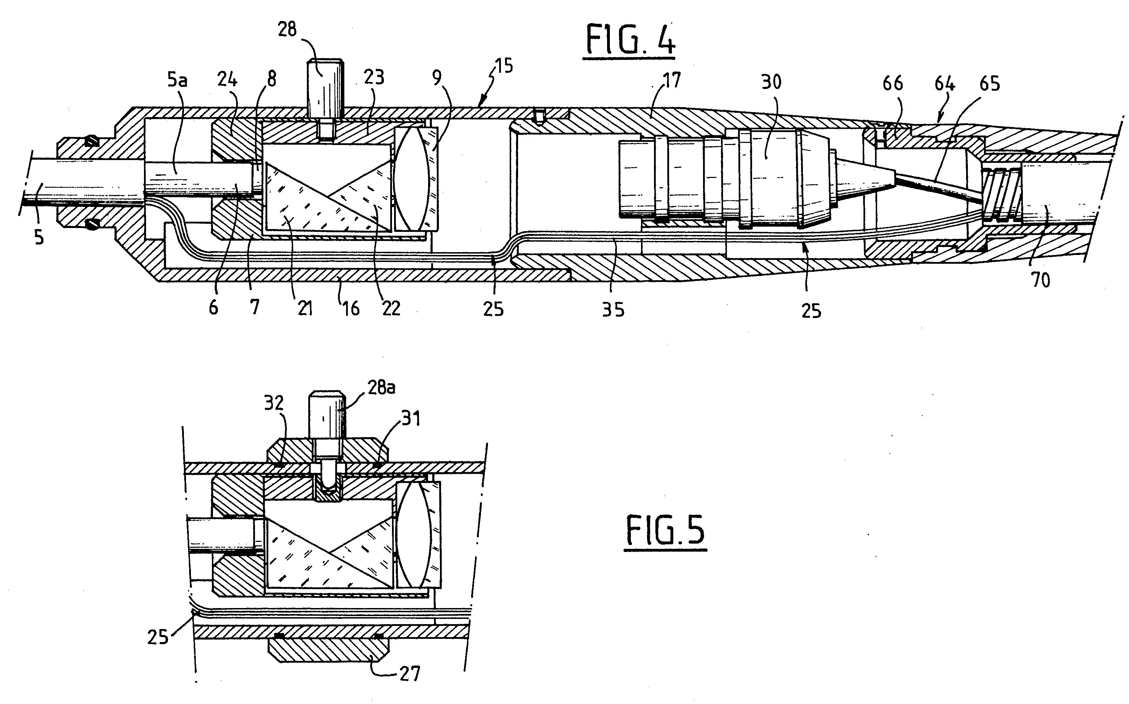

En ce qui concerne le système de prismes 20, celui-ci comporte essentiellement deux prismes 21 et 22, dont le prisme 21 est un prisme à section de triangle rectangle (ayant 2 angles aiguës égaux à 60° et 30°, dans l'exemple illustré), alors que le prisme 22 est un prisme à section de triangle équilatéral qui est collé, par l'une de ses faces, sur la grande face du prisme 21 (du côté de l'angle de 30°), comme illustré en particulier à la figure 1 (voir aussi la figure 4). La colle est une colle transparente spéciale, ayant des propriétés optiques et connue des techniciens en la matière, notamment du type polymérisable aux UV.

Il est facile de vérifier qu'un trajet optique (notamment celui qui coïncide avec l'axe optique Xo) subit 3 réflexions à l'intérieur du système 20 de prismes 21, 22, de façon telle que le trajet optique sortant de ce système est aligné avec le trajet optique qui entre dans le même système. Cela signifie que le système 20 de prismes 21, 22 est équivalent à une lame optique à faces parallèles, dans laquelle le trajet optique est allongé par la triple réflexion évoquée plus haut, par rapport à la distance séparant les deux faces extrêmes de la lame équivalente. Cette triple réflexion a lieu sur la grande face du prisme 21, la face horizontale de ce même prisme 21 et sur la face oblique du prisme 22 qui n'est pas en contact avec le prisme 21 (voir une fois de plus les figures 1 et 4).

Un technicien en la matière peut facilement vérifier que ce système de prismes permet d'obtenir la rotation de l'image d'un angle égal à 2 lorsqu'il tourne autour de son axe d'un angle.

Le dispositif de rotation de l'image, dont fait partie le système de prismes 20, est représenté en détail à la figure 4, dans laquelle on remarque que les deux prismes, 21 et 22, sont logées dans un siège ménagé à l'intérieur d'une cage tournante 23. Cette cage est montée, libre de tourner, à l'intérieur d'une bague 24 solidarisée avec la poignée 15 du vidéo-endoscope. De façon plus précise, la solidarisation de cette bague a lieu au niveau de la paroi interne de la partie proximale 16 de la poignée 15, notamment par soudure ou par tout autre moyen.

Une molette 28, perpendiculaire à l'axe Xm du vidéo-endoscope et fixée à la paroi de la cage 23, permet la rotation de cette dernière et donc du système de prismes qui y est contenu. A cet effet, une fente transversale 26 (cf la figure 3) est ménagée dans la paroi cylindrique extérieure de la partie proximale 16 de la poignée 15, en sorte que la molette de manoeuvre 28 fasse saillie à l'extérieur de la poignée. La fente transversale 26 est ménagée sur une longueur permettant, comme représenté à la figure 3, une rotation de 180° de la cage (avec le système de prisme qu'elle contient) et donc une rotation de 360° de l'image fournie à ce système par le dispositif optique 10.

A la figure 4 on peut remarquer également la présence d'un tube 5a, contenant directement le système optique à lentilles 10 et qui traverse, conjointement au faisceau optique (mis sous la forme d'un cylindre optique 25a) le tube 5 d'accès à l'objet à observer. L'extrémité proximale 6 du tube 5a est logée dans l'ouverture centrale de la bague de support 24, dont la paroi présente une surépaisseur localisée nécessaire à l'emprisonnement de l'extrémité 6 du tube 5a. L'étanchéité de ce tube et la protection du système à lentilles, qui y est contenu, est assurée par une lentille 8. De même, l'étanchéité et la protection du système 20 de prismes 21 et 22 est assurée par une autre lentille 9, logée dans l'extrémité proximale de la cage tournante 23.

Une légère variante du dispositif de rotation de l'image, conforme à l'invention, est illustrée à la figure 5, où l'on peut apprécier la présence d'une bague 27 assurant l'étanchéité de la fente transversal 26, ce qui est utile dans certaines applications du vidéo-endoscope. Il va de soi que la molette de manoeuvre assurant une rotation de la cage 23 présente dans ce cas une configuration, 28a, s'adaptant à la présence de la bague d'étanchéité 27.

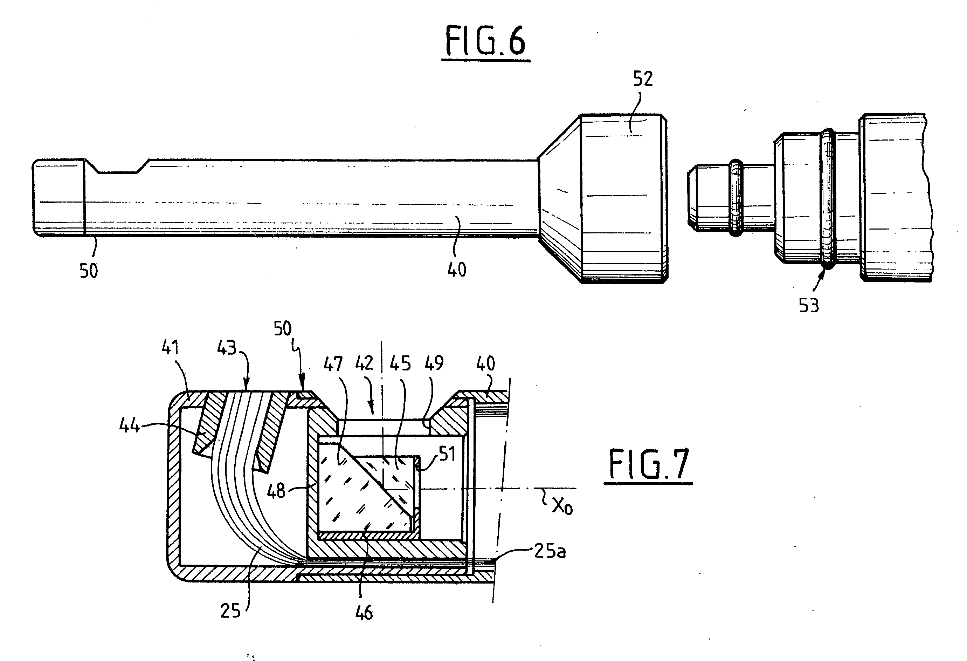

La figure 6 illustre un mode de réalisation du tube d'accès à l'objet à visualiser qui est une variante, 40, amovible et interchangeable de celui-ci, permettant la vision oblique, en particulier à 90°, de l'objet précité. Son extrémité distale 50 comporte un embout borgne 41 équipé d'une première et d'une deuxième fenêtres latérales 42 et 43. La fenêtre 42 est une fenêtre de visualisation oblique, notamment à 90° par rapport à l'axe optique Xo du vidéo-endoscope, alors que la fenêtre 43, -qui coopère avec un manchon de guidage à axe incliné 44-, permet d'amener le faisceau optique cylindrique 25a, après reconstitution sous forme de faisceau compact 25, à proximité de l'objet à visualiser, disposé latéralement par rapport à l'axe optique Xo.

La déviation, notamment à 90°, est obtenue par un prisme 45 porté par un premier et un deuxième supports 46, 47 logés dans une bague borgne 48 fixée à l'embout borgne 41 et équipée d'une fenêtre 49 alignée avec la fenêtre 42 de cet embout. Le premier support du prisme 45, qui est sensiblement en forme d'équerre, comporte sur le côté perpendiculaire à l'axe optique une fenêtre 51, qui est traversée par cet axe et qui autorise donc la visualisation à 90° de l'objet évoqué plus haut.

Le montage du tube d'accès amovible 40 se fait par l'intermédiaire d'une pièce 52 (cf la figure 6) qui est montée de façon tournante sur le joint torique 53.

Il est, en outre, clair que la présence du prisme 45 introduit une réflexion supplémentaire par rapport aux réflexions introduites par le système 20 de prismes 21 et 22.

Une variante amovible et interchangeable peut être également prévue non seulement dans le cas de vision oblique, notamment à 90°, mais aussi dans le cas de vision directe, pour pouvoir associer à un même dispositif de prises de vue, -tel que celui qui a été décrit plus haut et qui est logé dans la poignée (ou dans le manche) du vidéo-endoscope-, différents dispositifs optiques interchangeables non seulement en fonction de l'axe de vision (directe ou oblique), mais également en fonction du diamètre et de la longueur, notamment du tube d'accès à l'objet à observer.

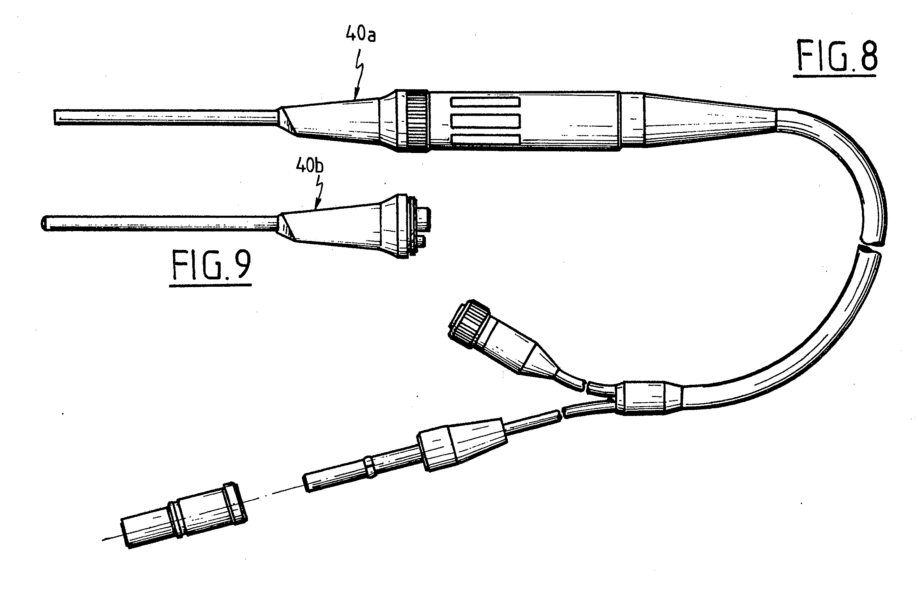

A titre d'exemple non limitatif, les figures 8 et 9 illustrent deux autres variantes amovibles et interchangeables du dispositif optique : la référence 40a représente un tube d'accès (ou une canne optique) de vision directe, qui est connectée à la poignée du vidéo-endoscope de façon amovible et qui peut être interchangée avec une autre canne optique du même type, mais ayant une longueur et/ou un diamètre différents, ou avec une canne optique 40b du type déjà illustré à la figure 6 ou encore du type illustré à la figure 9, qui autorisent la vision oblique, notamment à 90°.

En ce qui concerne ces figures 8 et 9, il y a lieu de remarquer qu'elles ne comportent pas d'autres références numériques, parce que les éléments qui y sont représentés se retrouvent dans les figures précédentes, et que dans la figure 8 on n'a pas représenté la molette de manoeuvre.

En faisant référence à la vue d'ensemble illustrée à la figure 3, on peut remarquer la présence d'un câble composite et unique 70 dans lequel sont réunis le câble optique 60 et le câble électrique 65, qui sont équipés à leurs extrémités proximales de raccords, tels que 61 et 62-63, permettant notamment la liaison avec un dispositif numérique de traitement d'images (à l'aide d'un ordinateur de pilotage équipé d'un moniteur de visualisation) et, respectivement, la liaison à n'importe quel type de source optique (non représentés).

Le câble composite et unique 70 est revêtu, à son extrémité distale, d'une pièce sensiblement tronconique 64 qui coopère avec un embout de liaison 66, de manière à assurer la fixation du câble 70 à la partie proximale 17 de la poignée 15 du vidéo-endoscope. La fixation des parties 16 et 17 de la poignée 15, de même que la fixation de l'embout 66 à la partie 17, sont obtenues par vissage ou par tout autre moyen équivalent (cf la figure 4).

Les câbles 65 et 60 se séparent à l'intérieur de la poignée 15, le premier pour aboutir au dispositif de prises de vue miniaturisé 30, tandis que le second se prolonge, -en restant appliqué sensiblement à la paroi intérieure de la poignée 15, d'un côté de celle-ci-, pour atteindre le tube 5 où les fibres optiques 35 sont disposées sous forme d'un cylindre optique 25a, comme déjà précisé plus haut.

La présente invention propose donc une vidéo-endoscope rigide qui, tout en permettant d'orienter rotativement l'image par rapport à un observateur ou à un dispositif de prises de vue, autorise -alternativement-la vision directe ou la vision latérale de l'objet à observer et assure une facilité d'emploi et une robustesse ainsi qu'une fiabilité de fonctionnement grâce, respectivement, à l'utilisation d'un câble composite unique et d'un dispositif de prises de vue miniaturisé, notamment du type à transfert de charges (dit dispositif CCD selon la terminologie anglo-saxonne, qui signifie "Charges Coupled Device"), à savoir d'un micro- senseur CCD, couleur, intégré dans la poignée de l'endoscope. De plus, la disposition concentrique des fibres optiques, par rapport au dispositif optique, permet d'obtenir un éclairage symétrique et uniforme, qui est nettement plus avantageux que l'éclairage utilisé dans la technique antérieure à l'aide de fibres optiques séparées de l'endoscope et situées sur le côté de celui-ci. Il est, en outre, clair que le fait d'orienter rotativement l'image est rendu possible grâce aussi au décentrement de l'axe optique par rapport à l'axe mécanique du vidéo-endoscope rigide selon l'invention.

Ainsi que cela ressort de ce qui précède, l'invention ne se limite nullement à ceux de ses modes de mise en oeuvre, de réalisation et d'application qui viennent d'être décrits de façon plus explicite ; elle en embrasse, au contraire, toutes les variantes qui peuvent venir à l'esprit du technicien en la matière, sans s'écarter du cadre, ni de la portée, de la présente invention. En particulier, il est possible de faire coopérer la bague d'étanchéité 27, illustrée à la figure 5, avec des joints toriques 31 et 32 logés dans deux rainures annulaires ménagées dans la face externe de la paroi de la poignée 15 du vidéo-endoscope, de façon à améliorer l'étanchéité de la fente 26. En outre, en ce qui concerne les moyens permettant la vision oblique d'un objet, à savoir le prisme 45 illustré à la figure 7, il va de soi qu'ils peuvent être supportés par d'autres moyens que ceux indiqués par les références 46 et 47 à la figure 7, où l'on a représenté en détail l'extrémité distale 50 du tube d'accès 40, pourvu qu'ils définissent avec précision l'inclinaison d'observation latérale souhaitée, par rapport à l'axe optique Xo du vidéo-endoscope. Bien entendu, les moyens permettant la vision latérale sont solidarisés avec la paroi interne de l'extrémité distale 50 du tube d'accès 40. De plus, l'extrémité distale 50 du tube d'accès 40 peut être réalisée de façon amovible et interchangeable, notamment en fonction de l'angle d'observation latérale que l'objet fait par rapport à l'axe optique Xo du vidéo-endoscope.

## Revendications

1.- Vidéo-endoscope rigide, comprenant :
- un dispositif optique (10), disposé à une extrémité, qui est destiné à donner une image d'un objet à observer et qui est logé à l'intérieur d'un tube d'accès (5) à cet objet ;
- un dispositif de prises de vue (30), dont l'axe est aligné avec l'axe (Xo) du dispositif optique (10) et qui est destiné à capter l'image fournie par ce dispositif optique ;
- un faisceau (25-25a) de fibres optiques (35), qui est destiné, d'une part, à être relié à une source optique et, d'autre part, à éclairer l'objet à observer et qui passe par ledit tube d'accès (5) à l'objet précité ; et

- des câbles optiques (60) et électriques (65)

lequel vidéo-endoscope (1) est caractérisé en ce qu'il comprend, en outre, un dispositif de rotation de l'image (20, 23, 24, 28 ; 28a) fournie par le dispositif optique (10) pour ajuster de façon optimale l'orientation de cette image par rapport à un observateur, lequel dispositif de rotation de l'image est disposé à l'intérieur d'une poignée de manoeuvre (15) conjointement avec le dispositif de prises de vue (30), entre ce dernier et le dispositif optique (10).

2.- Vidéo-endoscope selon la revendication 1, caractérise en ce que ledit dispositif de rotation de l'image comporte :

- un système (20) de prismes (21, 22) permettant la rotation de l'image (fournie par le dispositif optique) d'un angle 2 lorsqu'il tourne sur son axe d'un angle ;

- une cage (23) dans laquelle est monté le système (20) de prismes (21, 22) ;

- un moyen d'actionnement (28 ; 28a) de cette cage (23), à partir de l'extérieur, où ce moyen est accessible en passant par une fente transversale (26) ménagée dans la paroi cylindrique extérieure de la poignée (15), sur une longueur permettant au moins une rotation de 180° de la cage (23), -avec le système (20) de prismes (21, 22) qu'elle contient-, à cette rotation correspondant donc une rotation de 360° de l'image, ladite cage (23) étant montée, libre de tourner, à l'intérieur d'une bague de support (24) solidarisée avec la poignée (15).

3.- Vidéo-endoscope selon l'une quelconque des revendications 1 ou 2, caractérisé en ce que les câbles optiques (60) et électriques (65), qui comportent des raccords de liaison (62-63, 61), sont réunis, à l'extérieur de la poignée (15), dans un câble composite unique (70), aboutissant à l'extrémité proximale de la poignée (15) du vidéo-endoscope (1), et se divisent à l'intérieur de cette poignée (15), le câble électrique (65) pour être relié au dispositif de prises de vue (30) et le câble optique (60) pour s'écarter de l'axe (Xm) de la poignée (15) et passer d'un côté de la bague de support précitée (24) pour suivre ledit tube d'accès (5) dans lequel les fibres optiques (35) sont disposées de manière à constituer un cylindre optique (25a) entourant le dispositif optique susdit (10).

4.- Vidéo-endoscope selon l'une quelconque des revendications 1, 2 ou 3, caractérisé en ce que le tube (40 ; 40a ; 40b) d'accès à l'objet à visualiser est amovible et interchangeable, notamment en fonction de l'angle d'observation, directe ou oblique, que l'objet fait par rapport à l'axe optique (Xo) du vidéo-endoscope, ainsi qu'en fonction du diamètre et/ou de la longueur du tube d'accès.

5.- Vidéo-endoscope selon la revendication 4, caractérisé en ce que le tube d'accès (40 ; 40b) comporte des moyens permettant la vision oblique de l'objet et disposés à l'intérieur de l'extrémité distale du tube d'accès.

6.- Vidéo-endoscope selon la revendication 5, caractérisé en ce que les moyens permettant la vision oblique de l'objet comprennent un prisme (45) logé à l'intérieur de l'extrémité distale (50) du tube d'accès (40), où il est solidarisé avec des moyens de support (46, 47), qui définissent l'inclinaison d'observation latérale souhaitée, par rapport à l'axe optique (Xo) du vidéo-endoscope, et qui sont fixés à la paroi interne de l'extrémité distale (50) du tube d'accès (40) par tous moyens appropriés (48).

7.- Vidéo-endoscope selon l'une quelconque des revendications 5 ou 6, caractérisé en ce que ladite extrémité distale (50) du tube d'accès (40 ; 40b) est amovible et interchangeable, en particulier en fonction de l'angle d'observation latérale que l'objet fait par rapport à l'axe optique du vidéo-endoscope ainsi qu'en fonction du diamètre et/ou de la longueur du tube d'accès.

FIG.1

FIG.2

FIG.3

## FIG. 4

## FIG.5

EP 0 374 031 A1

FIG.6

FIG.7

40a

FIG.8

40b

FIG.9

EP 0 374 031 A1

# RAPPORT DE RECHERCHE EUROPEENNE

Numero de la demande

EP 89 40 3435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 096 761 (SUMITOMO) * Figures 1,3; page 3, lignes 12-24 * | 1 | G 02 B 23/24 |
| A | | 2-6 | |
| Y | EP-A-0 172 680 (OLYMPUS) * Figure 5; revendications * | 1 | |
| A | DE-A-2 430 148 (OLYMPUS) * Figures 3,5; page 6, ligne 20 - page 7, ligne 22 * | 1,3,5 | |
| A | DE-A-3 434 412 (OLYMPUS) * Figures 3,5; revendications * | 1,5 | |
| A | FR-A-2 317 673 (R. WOLF) * Figure 1; revendications * | 1,3,4 | |

| DOMAINES TECHNIQUES RECHERCHES (Int. Cl.5) |
|---|
| G 02 B A 61 B |

Le présent rapport a été établi pour toutes les revendications

| Lieu de la recherche | Date d'achèvement de la recherche | Examinateur |
|---|---|---|
| LA HAYE | 08-02-1990 | PFAHLER R. |

EPO FORM 1503 03.82 (P0402)